# EUROPEAN PATENT SPECIFICATION

(11) **EP 3 210 751 B1**
(45) Date of publication and mention of the grant of the patent: **22.07.2020**
(21) Application number: 15851733.4
(22) Date of filing: 05.10.2015
(51) Int. Cl.: B29C 49/46, B29C 49/06, B29C 49/08, B29C 45/16

(54) **POLYPROPYLENE PREFORM**
VORFORMLING AUS POLYPROPYLEN
PRÉFORME DE POLYPROPYLÈNE

(30) Priority: 24.10.2014 JP 2014217364
(43) Date of publication of application: 30.08.2017
(73) Proprietor: Discma AG, 8050 Zürich (CH)
(72) Inventor: OKUYAMA, Yuichi, Isehara-shi Kanagawa 259-1103 (JP); SHIMIZU, Kazuhiko, Isehara-shi Kanagawa 259-1103 (JP)
(74) Representative: Lavoix
(86) International application number: PCT/JP2015/005062
(87) International publication number: WO 2016/063470

(56) References cited:
- WO-A1-2014/065205
- JP-A- 2012 196 878
- JP-A- 2014 008 636
- US-A1- 2010 040 813

## Description

### Technical Field

The present invention relates to a method for performing liquid blow molding using a polypropylene preform.

### Technical Background

In recent years, plastic blow molded containers have been used in multiple applications due to their countless superior characteristics such as being lightweight and having an excellent appearance. Generally, this kind of container is molded by biaxial stretch blow molding a preform formed in a closed-ended tube shaped test-tube shape by vertically stretching in the axial direction using a stretch rod and horizontally stretching in an expanded state by blowing air into the inside of the preform from a nozzle inserted densely into a tube opening portion of the preform, in a state heated to a temperature where stretching properties can be realized. US 2010/040813 and WO 2014/065205 describe preforms for molding containers by air blow molding.

Meanwhile, in patent document 1, an invention related to a plastic container molding method is recorded where a preform is blow molded by supplying a liquid instead of air as a pressurizing medium. Furthermore, according to this manner of biaxial stretch blow molding that uses a liquid (hereinafter, sometimes referred to as "liquid blow molding"), in the liquid used as a pressurizing medium, the filling process can be omitted by using water, tea, or soft drinks and the like that fills a container as a product, thereby simplifying the production line.

JP 2014 008 636 describes performing liquid blow molding using a polypropylene preform made of a propylene-ethylene random copolymer resin.

### Prior Art Documents

### Patent Documents

Japanese Unexamined Patent Application Publication No. 2000-43129 JP

### Summary of Invention

### Problem to be Solved by the Invention

However, problems are associated with this type of liquid blow molding particularly in liquid blow molding using a polypropylene preform in that the preform may break during molding and the sort of conditions that allow for stable molding are currently still being researched and are not yet widely known.

An object of the present invention is to provide a technique that can perform stable molding by finding the optimal specifications for liquid blow molding in a polypropylene preform for biaxial stretch blow molding that uses liquid as a pressurizing medium.

### Means for Solving the Problem

The present invention is a method for performing liquid blow molding using a polypropylene preform 1, comprising the following steps: attaching the preform 1 being heated to a temperature capable of realizing a stretching effect to a molding die, molding the desired container by incorporating the preform 1 in a shape according to the cavity of the molding die by vertically stretching by a stretching rod of a blow molding device and stretching in an expanded state by a pressurizing liquid inserted into the preform 1 by a nozzle given to an opening portion 4 of the preform 1,
wherein, when measured with a differential scanning calorimeter (DSC), a relationship between the melting start temperature (Ts), melting peak temperature (Tm), and melting enthalpy (Hm) of the preform 1 is (Tm-Ts)/ Hm=0.88-0.95.

The inventors of the present invention have found that by conducting liquid blow molding using various polypropylene preforms, that the melting start temperature (Ts), the melting peak temperature (Tm), and the melting enthalpy (ΔHm) when measured using a differential scanning calorimeter (DSC) made of a polypropylene resin used in the preform, contribute greatly to stable molding. Specifically, when the melting peak is sharp (the difference between the melting start temperature and the melting peak temperature is small), the crystalline portion of the resin reaches the melting peak temperature once it begins to melt, and although the melted amount increases excessively making it difficult to maintain the shape of the preform, the knowledge was obtained that the melting of the crystalline portion included in the resin becomes easy to control if the melting peak is broad (the difference between the melting start temperature and the melting peak is large). Furthermore, the knowledge was obtained that when the melting enthalpy is too small, the crystalline portion melts excessively and it is difficult to maintain the shape of the preform, and conversely, when it is too large, the crystalline portion that does not melt becomes too numerous and ruptures easily due to the preform not stretching sufficiently. That is, for stable molding, the balance between the melting peak and the melting enthalpy is critical, and when further investigating this point, it was found that when the melting start temperature (Ts), the melting peak temperature (Tm), and the melting enthalpy (ΔHm) satisfy the relationship of (Tm-Ts)/ΔHm=0.60∼1.00, there are no problems such as breakage of the preform, and stable molding can be performed.

### Effect of the Invention

According to the present invention, in liquid blow molding using a polypropylene preform, there are no problems such as breakage of the preform during molding, and it is possible to perform stable molding.

### Brief Description of the Drawings

FIG. 1 is a half cross-sectional view illustrating one embodiment of a polypropylene preform for a method for performing liquid blow molding according to the present invention.
FIG. 2 is a side view illustrating a container shaped from the preform of FIG. 1 using liquid blow molding.
FIG. 3 is a graph illustrating one example of measurement results from the differential scanning calorimeter (DSC).

### Embodiment for carrying out the Invention

One embodiment of a propylene preform (hereinafter, at times referred to as "preform") for a method for performing liquid blow molding according to the present invention will be described below in further detail.

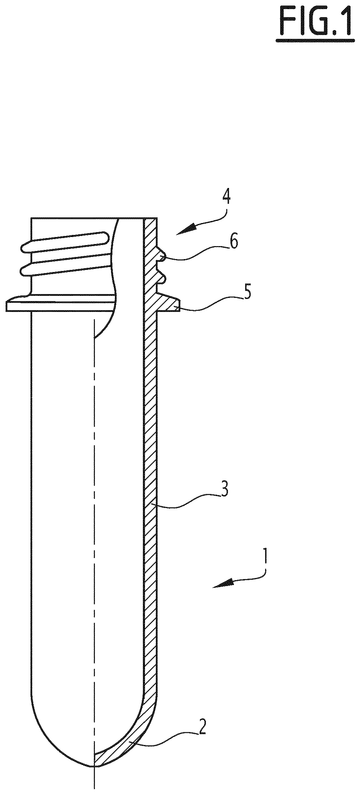

In FIG. 1, reference numeral 1 illustrates an embodiment of a preform for a method for performing liquid blow molding according to the present invention. The preform 1 is made of polypropylene (PP), which has an overall test tube shape. More specifically, composed of a semispherical shell shaped bottom portion 2 and a cylindrical body portion 3 connected to the bottom portion 2, and an opening portion 4 for opening at the top of the body portion 3. In the opening portion 4, a disc shaped neck ring 5 is provided, and a male threaded portion 6 is provided above the neck ring 5. The preform 1 of the present embodiment has a weight of 9g, a cylinder part outer diameter of 19.4 mm, an average body portion thickness of 2.3 mm, and the downward height of a neck extending from the lower surface of the neck ring to the lower surface of the bottom portion 2 is 70 mm. Note that this manner of preform 1, in addition to injection molding, can also be produced by compression molding or extrusion blow molding.

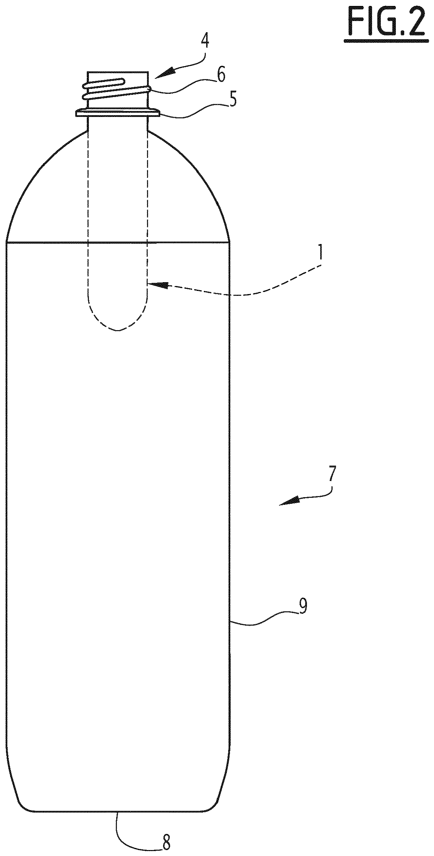

Furthermore, when performing liquid blow molding using the preform 1, the preform 1 heated to a temperature capable of realizing a stretching effect is attached to a molding die (not shown), molding the desired container by incorporating the preform 1 in a shape according to the cavity of the molding die by vertically stretching by a stretching rod of a blow molding device (not shown) and stretching in an expanded state by a pressurizing liquid inserted into the preform 1 by a nozzle given to the opening portion 4. In a container 7 of the present embodiment, as illustrated in FIG. 2, stretches the bottom portion 2 and the body portion 3 of the preform 1, but does not stretch the opening portion 4, and is a bottomed cylindrical shaped container (has a cylindrical shaped bottom portion 8 and a cylindrical shaped body portion 9). Furthermore, the body portion outer diameter is 66 mm, the average thickness of the body portion is 0.18 mm, the height extending from the lower surface of the neck ring to the lower surface of the bottom portion is 195 mm, and the fill capacity is 420ml.

Note that there are three varieties of polypropylene; homopolymer, random copolymer, and block copolymer (impact copolymer), but any of these may be used if they are 0.88 to 0.95 = (Tm-Ts)/ΔHm according to the preform of the present invention. Random copolymer and block copolymer are used in the present example. Note that other than being able to use random copolymer and block copolymer individually, a mixture of these may also be used.

Furthermore, in the method according to the present invention, the melting start temperature (Ts), the melting peak temperature (Tm), and the melting enthalpy (ΔHm) of the preform in the measurement of the differential scanning calorimeter (DSC) fulfill the relationship of 0.88 to 0.95 = (Tm-Ts)/ΔHm. Here, in the differential scanning calorimeter (DSC) measurement, a sample extracted from a predetermined place on the preform 1 is set in the differential scanning calorimeter, the temperature at a set speed (10°C/minute), and a melting enthalpy (ΔHm) is calculated from the surface of the endothermic peak along with the melting that is realized is the temperature scope of 40 to 200°C. Furthermore, the predetermined place on the preform 1 is a place where stretching has not been carried out, and when using a container after liquid blow molding, is measured by the sample extracted from the opening portion of an un-stretched portion.

### Examples

Liquid blow molding is performed using a variety of preforms where the type of polypropylene was changed, and confirmation was performed on whether or not stable molding could be performed. The type of polypropylene in each preform is just as illustrated in Table 1. In Table 1, "homo" is the homopolymer, "random" is the random copolymer, and "block" is the block copolymer (impact copolymer). Furthermore, comparative examples 1 and 2 and examples 1 through 10 are resins of individual grades respectively, but example 11 is a mixture of the random copolymer used in example 5 and the block copolymer used in example 8 (the ratio of block copolymer is 20% of the whole), and example 12 is a mixture of the random copolymer used in example 5 and the block copolymer used in example 9 (the ratio of block copolymer is 20% of the whole).

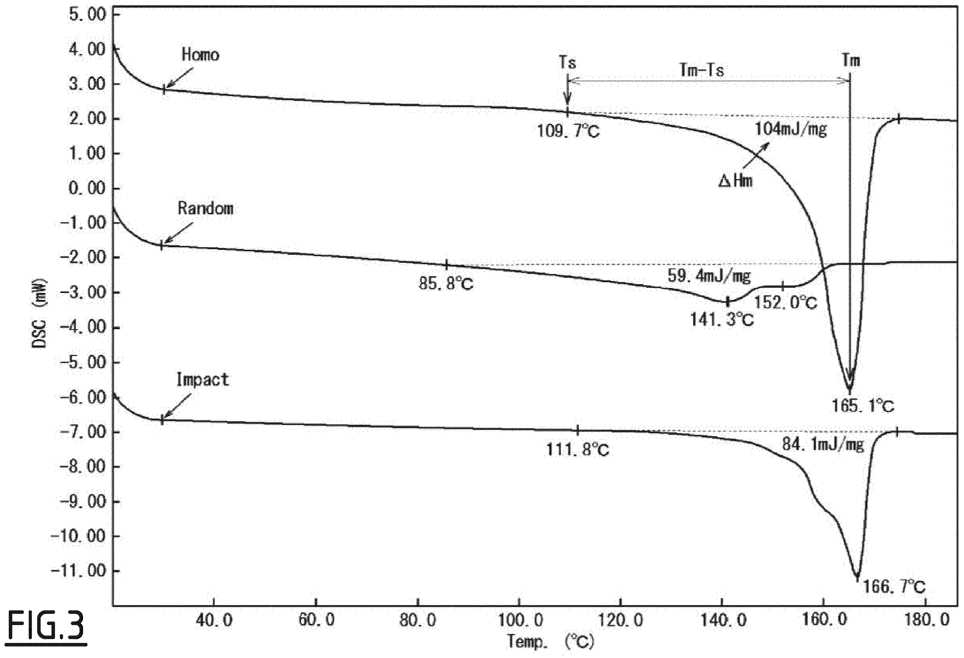

Furthermore, in the examples extracted from the comparative examples 1 and 2 and the examples 1 through 12, the melting start temperature (Ts), the melting peak temperature (Tm), and the melting enthalpy (ΔHm) obtained from the measurement of the differential scanning calorimeter (DSC) are just as illustrated in Table 1. Note that FIG. 3 illustrates a portion of the measurement results obtained from the differential scanning calorimeter (DSC), and in FIG. 3, "Homo" illustrates comparative example 2, "Random" illustrates example 5, and "Impact" illustrates example 9.

In the liquid blow molding of the preform, before attaching to the molding die, a preform was used that was heated to 130°C for a predetermined time. Furthermore, the pressurizing medium used was water, and the water temperature was set to 20°C. Furthermore, the temperature of the molding die was set to 20°C. Furthermore, the total vertical and horizontal stretching rate was approximately ten fold.

**[Table 1]**

| | Comparative example 1 | Comparative example 2 | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Type of polypropylene | Homo | Homo | Random | Random | Random | Random | Random | Random | Random | Block | Block | Block | Random + Block | Random + Block |
| Melting start temperature (Ts) [°C] | 104.9 | 109.7 | 87.8 | 68.4 | 91.8 | 84.1 | 85.8 | 72.6 | 88.2 | 89.9 | 111.8 | 58.9 | 90.0 | 82.1 |
| Melting peak temperature (Tm) [°C] | 164.9 | 165.1 | 144.9 | 139.5 | 148.3 | 140.1 | 141.3 | 141.1 | 143.6 | 150.1 | 166.7 | 123.3 | 142.7 | 150.0 |
| Melting enthalpy (ΔHm) [mJ/mg] | 106.0 | 104.0 | 74.8 | 82.3 | 74.5 | 65.9 | 59.4 | 74.7 | 70.3 | 71.4 | 84.1 | 73.2 | 61.3 | 71.4 |
| Tm-Ts [°C] | 60.0 | 55.4 | 57.1 | 71.1 | 56.5 | 56.0 | 55.5 | 68.5 | 55.4 | 60.2 | 54.9 | 64.4 | 52.7 | 67.9 |
| (Tm-Ts)/ ΔHm | 0.57 | 0.53 | 0.76 | 0.86 | 0.76 | 0.85 | 0.93 | 0.92 | 0.79 | 0.84 | 0.65 | 0.88 | 0.86 | 0.95 |
| Liquid blow moldability | x | x | Δ | Δ | ○ | ○ | ○ | ○ | ○ | ○ | ○ | ○ | ○ | ○ |

| | | | | | | | | | | | | | | |
|---|---|---|---|---|---|---|---|---|---|---|---|---|---|---|
| ○: No problems in liquid blow molding, the range of molding conditions is also wide. Δ: The preform did not rupture, but the range of molding conditions is narrow. x: The preform may rupture due to liquid blow molding | | | | | | | | | | | | | | |

As illustrated in Table 1, in the preform where the melting start temperature (Ts), the melting peak temperature (Tm), and the melting enthalpy (ΔHm) in the measurement from the differential scanning calorimeter (DSC) fulfill (Tm-Ts)/ ΔHm=0.60 to 1.00 (examples 1 through 12), there were no occurrences of problems where the preform ruptured and the like in liquid blow molding, and it was understood that stable molding could be performed. Particularly, in the preform that fulfills (Tm-Ts)/ ΔHm=0.88 to 0.95, since the range of molding conditions is wide, it was understood that stable molding could be performed even with the addition of dispersion in mass production.

The composition of the present invention and the operation effect thereof were described above, but the preform according to the present invention is not limited to the embodiments stated above, and variety of changes within the scope according to the scope of claims are possible. For example, in the embodiment stated above, a container having a bottomed cylindrical shape and an internal capacity of 420ml was described, but another shape such as a bottomed rectangular shape, as well as a more compound or a more large-sized container may be applied.

### Description of Numerals

1: preform
2: bottom portion
3: body portion
4: opening portion
5: neck ring
6: male screw portion
7: container
8: bottom portion
9: body portion

## Claims

1. A method for performing liquid blow molding using a polypropylene preform 1, comprising the following steps: attaching the preform 1 being heated to a temperature capable of realizing a stretching effect to a molding die, molding the desired container by incorporating the preform 1 in a shape according to the cavity of the molding die by vertically stretching by a stretching rod of a blow molding device and stretching in an expanded state by a pressurizing liquid inserted into the preform 1 by a nozzle given to an opening portion 4 of the preform 1,
**characterized in that**, when measured with a differential scanning calorimeter (DSC), a relationship between the melting start temperature (Ts), melting peak temperature (Tm), and melting enthalpy (Hm) of the preform 1 is (Tm-Ts)/ Hm=0.88-0.95.

## Patentansprüche

1. Verfahren zum Durchführen von Flüssigkeitsblasformen unter Verwendung eines Polypropylen-Vorformlings 1, folgende Schritte umfassend: Befestigen des Vorformlings 1, der auf eine Temperatur erwärmt wird, bei der eine Streckwirkung durchführbar ist, an einem Formwerkzeug, Formen des gewünschten Behälters durch Aufnehmen des Vorformlings 1 in einer dem Hohlraum des Formwerkzeugs entsprechenden Gestalt durch vertikales Verstrecken mittels einer Reckstange einer Blasformvorrichtung und Ausformen in einen ausgeweiteten Zustand durch eine Druckflüssigkeit, welche durch eine in einem Öffnungsbereich 4 des Vorformlings 1 angeordnete Düse in den Vorformling 1 eingeführt wird,
**dadurch gekennzeichnet, dass** ein Verhältnis zwischen der Schmelzstarttemperatur (Ts), der Schmelzpeaktemperatur (Tm) und der Schmelzenthalpie (Hm) des Vorformlings 1 beim Messen mit einem Differenzkalorimeter (DSC) (Tm-Ts) / Hm = 0,88-0,95 beträgt.

## Revendications

1. Procédé de moulage par soufflage de liquide au moyen d'une préforme de polypropylène 1, comprenant les étapes suivantes : fixation de la préforme 1 étant chauffée à une température capable de réaliser un effet d'étirage à une matrice de moulage, moulage du récipient souhaité par incorporation de la préforme 1 dans une forme correspondant à la cavité de la matrice de moulage par étirage vertical par une tige d'étirage d'un dispositif de moulage par soufflage et étirage dans un état expansé par un liquide sous pression inséré dans la préforme 1 par une buse introduite dans une partie d'ouverture 4 de la préforme 1,
**caractérisé en ce que**, lorsqu'elles sont mesurées avec a un calorimètre à balayage différentiel (DSC), une relation entre la température de début de fusion (Ts), la température de pic de fusion (Tm), et l'enthalpie de fusion (Hm) de la préforme 1 est (Tm-Ts)/Hm=0,88-0,95.
